# EUROPÄISCHE PATENTSCHRIFT

(11) **EP 0 815 459 B1**
(45) Veröffentlichungstag und Bekanntmachung des Hinweises auf die Patenterteilung: **07.04.1999**
(21) Anmeldenummer: 96900882.0
(22) Anmeldetag: 01.02.1996
(51) Int. Cl.: G01R 31/02

(54) **SCHALTUNGSANORDNUNG UND VERFAHREN ZUM TESTEN VON NICHT INTERMITTIERENDEN GEBERN**
CIRCUITRY AND PROCESS FOR TESTING NON-INTERMITTENT SIGNAL GENERATORS
CIRCUITS ET PROCEDE DE CONTROLE DE GENERATEURS NON INTERMITTENTS DE SIGNAUX

(30) Priorität: 22.03.1995 DE 19510332
(43) Veröffentlichungstag der Anmeldung: 07.01.1998
(73) Patentinhaber: PILZ GmbH & CO., 73760 Ostfildern (DE)
(72) Erfinder: HECKEL, Andreas, D-71334 Waiblingen (DE); RUPP, Roland, D-73110 Hattenhofen (DE); SCHWENKEL, Hans, Dieter, D-70192 Stuttgart (DE)
(74) Vertreter: Patentanwälte Rüger, Barthelt & Abel
(86) Internationale Anmeldenummer: DE9600146
(87) Internationale Veröffentlichungsnummer: WO9629609

(56) Entgegenhaltungen:
- WO-A-94/00771
- ELECTRONICS, Bd. 46, Nr. 10, 10.Mai 1973, Seiten 115-116, XP002002824

## Beschreibung

Bei Steuerungen muß man zwischen intermittierenden und nicht intermittierenden Gebern bzw. Meldegeräten unterscheiden. Im Falle von intermittierenden Meldegeräten oder Gebern läßt sich eine Funktionsprüfung mit Hilfe eines Plausibilitätstestes des von diesen Gebern oder Meldegeräten kommenden Signals erreichen. Nicht jedoch bei den sogenannten nicht intermittierenden Gebern oder Meldegeräten, die über lange Zeit ein unverändertes Dauersignal liefern. Ein einfaches Beispiel für einen solchen Geber oder Meldegerät ist ein Türkontaktschalter, der sowohl bei geöffneter als auch bei geschlossener Tür solange ein Dauersignal abgibt, wie sich der Betriebszustand der Tür nicht verändert.

Andererseits ist es aber sehr wichtig, gerade auch bei solchen Meldegeräten festzustellen, ob sie noch einwandfrei arbeiten oder eine Beschädigung aufgetreten ist und möglicherweise ein Betriebszustand signalisiert wird, der den wahren Verhältnissen nicht mehr entspricht. Ein Beispiel im Falle eines Türkontaktschalters wäre bei einer zweikanaligen Überwachungsschaltung der Kurzschluß zwischen den beiden Türkontaktschaltern. Dies hätte zur Folge, daß nur noch der eine Türkontaktschalter betätigt werden muß, während es auf die Stellung des anderen Türkontaktschalters nicht mehr ankommt. Aus der Sicht der Auswerteschaltung würden nach wie vor beide Schalter betätigt werden.

Eine weitere Schwierigkeit bei der Funktionsprüfung der Meldegeräte hat ihre Ursache in den üblicherweise notwendigen Amplituden- oder Frequenzfiltern, die erforderlich sind, um das Signal, das von dem Meldegerät kommt, hinreichend zu entprellen und zu entstören, um Beschädigungen und Fehlschaltungen der Eingänge der nachfolgenden Auswerteschaltung der Steuerung auszuschließen. Diese Filter haben unter Umständen eine beträchtliche Einschwingzeit. Das Signal am Ausgang der Leitung, die das Meldegerät mit der betreffenden Auswerteschaltung verbindet, müßte der Filtereinschwingzeit entsprechend lang sein. Diese Zeitdauer konkurriert mit der Anforderung, die Test zeit für die Meldegerät so kurz wie irgend möglich zu halten, damit keine gefährlichen Betriebszustände auftreten. Jede Verlängerung der Testzeit bedeutet nämlich, daß solange der Test abläuft die Überwachungsschaltung nicht erfährt, wenn die Meldegeräte einen gefährlichen Betriebszustand der überwachten Anlage melden. Hinzukommt, daß bei mehrkanaligen Überwachungseinrichtungen sich die Testzeit entsprechend der Anzahl der Kanäle vergrößert, da alle dieselbe Anlagenstelle überwachenden Meldegerät gleichzeitig überprüft werden müssen.

Einfacher zu handhaben sind dagegen auch galvanisch durchverbundene Übertragungsleitungen, die Wechselsignale übertragen und dazu endseitig über Transformatoren an den Leitungstreiber und den Leitungsempfänger angeschlossen sind. Diese Leitungen können, wie in der WO 94/00771 gezeigt, mit Hilfe von Gleichspannungssignalen überprüft werden, während gleichzeitig die Wechselspannungsübertragung läuft. Zu diesem Zweck ist an beiden Enden der Leitung jeweils ein Balun vorgesehen, der einenends mit der Übertragungsleitung und andernends mit einem Symmetriertransformator verbunden ist. In der Verbindungsleitung zwischen dem Symmetrietransformator und dem Balun ist zur galvanischen Unterbrechung ein Kondensator eingeschaltet, der das Wechselspannungsnutzsignal durchlässt und an den zu Testzwecken die zur Prüfung verwendete Gleichspannung angelegt wird. An dem Kondensator am anderen Ende der Leitung lässt sich diese Gleichspannung auf Polarität und Amplitude überprüfen. Hierdurch wird festgestellt, ob die Leitung einwandfrei durchgeschaltet, unterbrochen ist oder aber einen Querschluss aufweist.

Eine andere Möglichkeit, ein mehradriges Kabel zu testen, ist in dem Aufsatz "Timer ICs and LEDs form Cable tester", erschienen in "Electronics" 1973, S. 115 ff. beschrieben. An einem Ende des Kabels wird ein Ringzähler angeschlossen, während das andere Kabelende mit einer Basis einer Transistorkomplementärstufe verbunden ist. Die andere Basis liegt direkt an dem betreffenden Ausgang des Ringzählers, der für jede Ader in dem Kabel eine Stufe aufweist. Je nachdem, wie die Leitverhältnisse in dem Kabel sind, ergibt sich eine unterschiedliche Stromrichtung durch eine zu den Transistoren parallelgeschaltete doppelte LED.

Mit dieser Testeinrichtung ist es jedoch nicht möglich, das Kabel im Gebrauchszustand zu überprüfen. Es muss vielmehr aus der Übertragungsstrecke herausgenommen werden.

Ausgehend hiervon ist es Aufgabe der Erfindung, eine überwachungseinrichtung zu schaffen, die schnelle Tests der zu der Überwachungseinrichtung gehörenden Meldegeräte oder Geber ermöglicht. Außerdem ist es Aufgabe der Erfindung, ein entsprechendes Verfahren anzugeben.

Diese Aufgabe wird erfindungsgemäß durch die Überwachungseinrichtung mit den Merkmalen des Anspruches 1 bzw. das Verfahren mit den Merkmalen des Anspruches 17 gelöst.

Aufgrund der speziellen Ausgestaltung der Überwachungseinrichtung werden die Meldegeräte und ihre Zuleitungen gleichsam von der Rückseite her oder unter Verwendung einer kurzen Einschwingzeit überprüft, wodurch die Einschwingzeiten der an den Signalausgängen für den Normalbetrieb enthaltenen Filter weitgehend eliminiert werden können. Mit Hilfe der neuen Schaltungsanordnung werden beispielsweise bis auf den Stromversorgungseingang eines Meldegerätes alle übrigen Meldegeräte an dem Stromversorgungseingang mit einem definierten Widerstand belastet und sodann wird an diesen belasteten Stromversorgungseingängen die anstehende Spannung überprüft. Dieser Schaltzustand wird zyklisch für alle Meldegeräte durchgeführt, um zu überprüfen, ob ein Kurzschluß zur Versorgungsspannung vorliegt. In einem solchen Falle tritt eine Spannungsverschleppung von demjenigen Meldegerät, das eine Versorgungsspannung erhält, zu einem Meldegerät ein, das mit einem definierten Widerstand belastet ist. Diese Spannungsverschleppung kann ohne weiteres erkannt werden. Da die Überprüfung an der Speiseseite der Meldegeräte erfolgt und nicht auf der Seite ihres Signalausgangs sind die Einschwingzeiten, die zwischen dem Ausgang des Meldegeräts und dem Normaleingang der nachfolgenden Auswerteschaltung liegen weitgehend eliminiert. Es können wesentlich schnellere Filter verwendet werden, die lediglich Störsignale unterdrücken, nicht aber im Sinne der Unterdrückung möglicherweise langer Prellzeiten ausgelegt sind.

Andererseits lassen sich durch die neue Schaltungsanordnung auch eine Reihe von Erdschlußfehlern erkennen, die zwischen dem Meldegerät und der das jeweilige Meldegerät betreibenden Spannungsquelle liegen.

Wenn beispielsweise bei geöffnetem Meldegerät oder Geber eine Beschädigung des Zuleitungskabels mit der Folge eines Kurzschlusses zur Masse hin auftritt, kann dieser Fehler ohne weiteres erkannt werden. Das Anlegen der Versorgungsspannung an dieses schadhafte Kabel und das Überprüfen der Eingangsspannung führt zur Diagnose des Fehlers, weil die Versorgungsspannung nicht in der erwarteten Weise ansteigt. Sie wird stattdessen durch den Kurzschluß belastet, was im Zusammenspiel mit dem Innenwiderstand der Spannungsquelle bzw. den Mitteln zur Veränderung der Spannung zu einem entsprechenden Spannungsabfall führt.

Bei einer einfachen Ausführungsform der Schaltungsanordnung sind die Mittel zum Verändern der Spannung und die Spannungsquellen identisch, d.h. es wird eine Spannungsquelle verwendet, deren Ausgangsspannung umschaltbar ist. Eine solche in der Ausgangsspannung umschaltbare Spannungsquelle ist beispielsweise eine Gegentaktschaltung aus zwei Transistoren, deren Serienschaltung zwischen die Versorgungsspannung und die Schaltungsmasse gelegt ist. Je nach dem welcher der beiden Transistoren angesteuert ist, liefert die Spannungsquelle entweder die normale Versorgungsspannung oder sie erdet ihren Spannungsausgang mit einem definierten Innenwiderstand. Die Erkennung von Fehlern in den Zuleitungen und den Meldegeräten wird erleichtert, wenn der Innenwiderstand, mit dem die Meldegeräte gespeist werden, von der Stromflußrichtung abhängig ist. Es verkürzen sich dadurch die Einschwingzeiten beim Umschalten auf die normale Versorgungsspannung, während andererseits eine Entladung der Leitung möglich ist, ohne eingeschleppte Spannungen unmittelbar nach Masse kurzzuschließen.

Gefährliche Spannungsverschleppungen lassen sich vermeiden, wenn die Ankopplung der Auswerteschaltung an den Stromversorgungseingang des Meldegerätes bzw. den Ausgang der zugehörigen Spannungsquelle über einen Optokoppler erfolgt.

Wenn das Meldegerät auch in Rückwärtsrichtung von dem Signalausgang zu dem Stromversorgungseingang einen detektierbaren Strom zuläßt, können auch Kabelbeschädigungen erkannt werden, die zwischen dem Meldegerät und dem Normaleingang der zugehörigen Auswerteschaltung liegen. Bei einfachen Schaltern ist dies ohnehin immer gewährleistet. Sollte hingegen das Meldegerät über diese Eigenschaft nicht ohne weiteres verfügen, genügt unter Umständen die Verwendung einer entsprechend gepolten Diode, um diese Funktion zu erbringen.

Im übrigen sind Weiterbildungen der Erfindung Gegenstand von Unteransprüchen.

In der Zeichnung sind Ausführungsbeispiele des Gegenstands der Erfindung dargestellt. Es zeigen:
- Fig. 1: ein Blockschaltbild der neuen Überwachungseinrichtung, wobei die Meldegeräte von der Speiseseite her getestet werden, und
- Fig. 2: ein Blockschaltbild der neuen Überwachungseinrichtung, wobei die Meldegeräte vom Signalausgang her getestet werden.

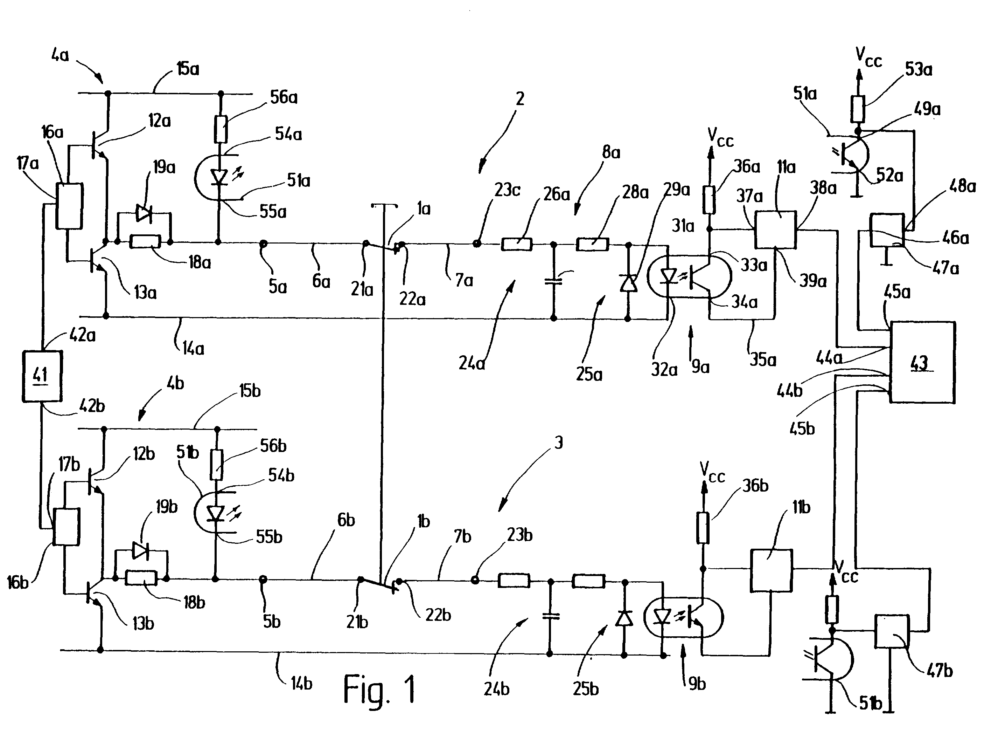

In Fig. 1 ist als Blockschaltbild ein Ausschnitt aus einer Maschinensteuerung veranschaulicht und zwar ist exemplarisch jener Bereich gezeigt, der dazu dient, mit Hilfe zweier Meldegeräte 1a, 1b eine bestimmte Stelle der gesteuerten Anlage zu überwachen. Bei der überwachten Stelle handelt es sich beispielsweise um die Zugangstür in einem Schutzzaun, hinter dem sich eine Maschine befindet. Die gezeigte Überwachungseinrichtung enthält einen Kanal 2 sowie einen Kanal 3, die identisch aufgebaut sind. Es werden deswegen für die Bauteile der beiden Kanäle 2 und 3 dieselben Bezugszeichen verwendet, die zur Unterscheidung mit einem "a" oder "b" ergänzt sind. Die nachstehende Erläuterung des Aufbaus bezieht sich zunächst einmal auf den Kanal 2.

Der Kanal 2 enthält eine Spannungsquelle 4a, an deren Stromausgang 5a über eine Leitung 6a das Meldegerät 1a angeschlossen ist. Eine weitere Leitung 7a führt von dem Meldegerät 1a zu einem ersten Eingangsfilter 8a, das ausgangsseitig über einen Optokoppler 9a mit einem weiteren Filter 11a verbunden ist.

Die Spannungsquelle 4a besteht aus zwei in Kaskade geschalteten NPN-Transistoren 12a und 13a, wobei der Transistor 13a mit seinem Emitter an einer Schaltungsmasse 14a liegt. Vom Kollektor des Transistors 13a führt eine Verbindung zu dem Emitter des Transistors 12a, dessen Kollektor an einer positive Versorgungsspannung 15a angeschlossen ist. Die beiden Basen der Transistoren 12a und 13a sind an eine Phasenumkehrstufe 16a angeschlossen, die einen Steuereingang 17a aufweist. Von dem Kollektor des Transistors 13a bzw. dem Emitter des Transistors 12a führt ein Widerstand 18a zu dem Stromausgang 5a, wobei zu dem Widerstand 18a eine Diode 19a parallelgeschaltet ist, deren Kathode ebenfalls an dem Stromausgang 5a liegt.

Mit Hilfe dieser Spannungsquelle 4a kann über ein entsprechendes binäres Steuersignal an dem Eingang 17a der Stromausgang 5a entweder über den Widerstand 18a und den Transistor 13a zu der Schaltungsmasse 14a geerdet werden oder im anderen Zustand des Signals an dem Steuereingang 17a wird der Transistor 13a gesperrt und der Transistor 12a leitend geschaltet, so daß der Stromausgang 5a über den Widerstand 18a Spannung aus der Stromversorgungsleitung 15a erhält.

Das Meldegerät 1a ist im gezeigten Fall ein einfacher Schalter mit einem Stromversorgungseingang 21a und einem Signalausgang 22a. Der Stromeingang 21a ist über die bereits erwähnte Leitung 6a mit dem Stromausgang 5a verbunden. Diese Leitung 6a hat ebenso wie die Leitung 7a eine beträchtliche Länge. Die Länge hängt von der Entfernung zwischen dem Meldegerät la und dem Ort ab, an dem sich die Überwachungsschaltung bzw. die Maschinensteuerung befindet. Üblicherweise betragen die Leitungslängen einige Meter bis einige zehn Meter. Es muß mit nennenswerten eingestreuten Störungen gerechnet werden. Die Leitung 7a ist deswegen auch an einen Eingangsanschluß 23a des Filters 8a angeschlossen, das aus einem RC-Tiefpaß 24a sowie einem Amplitudenfilter 25a besteht. Der RC-Tiefpaß 24a enthält einen an den Eingangsanschluß 23a angeschalteten ohmschen Widerstand 26a, dessen anderes Ende über einen Kondensator 27a an der Schaltungsmasse 14a liegt. Von der Verbindungsstelle zwischen dem Widerstand 26a und dem Kondensator 27a führt ein weiterer Begrenzungswiderstand 28a zu einer Diode 29a, deren Anode an die Schaltungsmasse 14a angeschlossen ist. Parallel zu der Diode 29a liegt mit seinen Eingangsanschlüssen 31a und 32a der Optokoppler 9a. Hierdurch wird eine galvanische Trennung zu der im Schaltbild rechts folgenden Schaltung erreicht.

Der Optokoppler 9a weist zwei Ausgangsanschlüsse 33a und 34a auf, wobei der Ausgangsanschluß-34a zu einer weiteren Schaltungsmasse 35a führt, während der Ausgangsanschluß 33a über einen Arbeitswiderstand 36a an einer Versorgungsspannung V_{cc} liegt. An der Verbindungsstelle zwischen dem Widerstand 36a und dem Ausgangsanschluß 33a wird das Ausgangssignal abgegriffen, das in einen Eingang 37a eines weiteres Filters lla gelangt. Dieses Filter 11a weist einen Signalausgang 38a sowie einen Masseanschluß 39a auf.

Der bereits erwähnte Kanal 3 ist mit den gleichen Bauelementen in einer identischen Schaltung aufgebaut. Für beide Kanäle 2 und 3 ist eine Teststeuerschaltung 41 mit zwei Steuerausgängen 42a und 42b gemeinsam vorhanden, die an die Steuereingänge 17a bzw. 17b der Phasenumkehrstufe 16a bzw. 16b angeschlossen sind.

Ferner gibt es für beide Kanäle 2 und 3 eine gemeinsame Steuer- und Auswerteschaltung 43 mit zwei Normaleingängen 44a und 44b, die im Normalbetrieb abgefragt werden, sowie mit zwei Testeingängen 45a und 45b, die im weiter unten beschriebenen Testmodus abgefragt werden. Der Normaleingang 44a ist mit dem Ausgang 38a des Filters lla verbunden, während der Testeingang 45a zu einem Ausgang 46a eines Filters 47a führt, dessen Eingang 48a an einem Ausgangsanschluß 49a eines Optokopplers 51a liegt. Ein weiterer Ausgangsanschluß 52a des Optokopplers 51a liegt an der Schaltungsmasse 35a, während der Ausgangsanschluß 49a über ein Arbeitswiderstand 53a an der zweiten Versorgungsspannung V_{cc} liegt.

Die Eingangsseite des Optokopplers 21a mit Eingangsanschlüssen 54a und 55a ist an dem Stromausgang 5a und über einen Widerstand 56a an der Versorgungsspannung 15a angeschlossen.

Sinngemäß derselbe Aufbau gilt wiederum für den Kanal 3.

Obwohl das Schaltbild lediglich mit zwei Kanälen 2 und 3 gezeigt ist, besteht auch die Möglichkeit drei parallelgeschaltete Kanäle zu verwenden, um die Sicherheit noch weiter zu vergrößern. Dieser dritte Kanal hätte dann wiederum denselben Aufbau wie der Kanal 2 und die den beiden Kanälen gemeinsamen Schaltungen 41 und 43 hätten jeweils noch einen dritten Ausgang bzw. noch einen weiteren Normaleingang und einen weiteren Testeingang.

Hinsichtlich des mechanischen Aufbaus ist es noch wichtig zu erwähnen, daß sowohl die Spannungsquellen 4a und 4b zusammen mit der Teststeuerschaltung 41 in räumlicher Nähe zu den Filtern 8a, 11a, 47a und der Auswerteund Steuerschaltung 43 untergebracht sind, beispielsweise in demselben Gehäuse. Der Stromausgang 5a und der Eingang 23a sind folglich auch unmittelbar benachbart, und die beiden Leitungen 6a und 7a sind eine Zweidrahtverbindung. Das Blockschaltbild nach Fig. 1 gibt folglich nicht die wahren räumlichen Verhältnisse, sondern nur die elektrischen Verhältnisse wieder.

Schließlich ist noch festzuhalten, daß die Teststeuerschaltung 41 sowie die Auswerte- und Steuerschaltung 43 in Mikroprozessoren oder Mikrocomputern realisiert sind bzw. Programmteile in einem einzigen Mikrocomputer oder Mikroprozessor repräsentieren. Wie hardwaretechnisch diese Schaltungen 41 und 43 ausgeführt werden, hängt von dem jeweiligen Anwendungsfall ab und hat im übrigen keine Rückwirkungen auf die Erfindung.

Die Funktionsweise der insoweit beschriebenen Überwachungseinrichtung ist wie folgt:

### Normalbetrieb

Im Normalbetrieb wertet die Auswerte- und Steuerschaltung 43 den Betriebszustand der beiden Meldegeräte 1a und 1b, d.h. der als Schalter ausgeführten Geber, aus, mit deren Hilfe z.B., wie oben erwähnt, die Stellung einer Schutztür oder einer Zugangstür überwacht wird. Wenn der Gefahrenbereich geschlossen ist, sind die beiden Schalter 1a und 1b ebenfalls geschlossen, d.h. es handelt sich hierbei um Ruhestrommeldegeräte.

Um diese Funktion zu realisieren, steuert die Auswerte- und Steuerschaltung 43 die Teststeuerschaltung 41 so, daß diese an ihren Ausgängen 42a und 42b die binären Signale mit einem Zustand abgibt, um über die Phasenumkehrstufen 16a bzw. 16b den Transistor 12a bzw. 12b leitend zu steuern, während der jeweils andere Transistor 13a und 13b in de Sperrzustand geschaltet ist. Der Stromausgang 5a liegt damit auf dem Potential der Versorgungsspannung 15a.

Dieses aus der Spannungsquelle 4a gelieferte Strom/-Spannungssignal gelangt über die Leitung 6a zu dem Meldegerät 1a und von dort weiter über die Leitung 7a in den Eingang 23a des Filters 8a. Mit Hilfe des Filters 8a bzw. in dem anderen Kanal 3 mit Hilfe des Filters 8b wird das in den Eingang 23a bzw. 23b gelangende Spannungssignal von hochfrequenten Störimpulsen und unzulässigen Spannungsspitzen befreit, ehe es in den Optokoppler 9a eingespeist wird. Von hier gelangt das Signal durch ein weiteres Filter 11a ebenfalls mit Tiefpaßcharakteristik und gegebenenfalls nach Impulsformung in den Normaleingang 44a bzw. 44b im Falle des anderen Kanals 3. Das Filter 11a bzw. 11b soll die restlichen Störungen unterdrücken und das Signal entprellen. Die Filter 11a und 11b haben eine entsprechend niedrige Grenzfrequenz.

Die Auswerteschaltung 43 überprüft im Normalbetrieb ständig, ob in beiden Kanälen 2 und 3 innerhalb eines festgelegten Zeitfensters die beiden Kanäle 2 und 3 dieselben Stellungen der Schalter 1a und 1b melden. Versagt einer der Schalter la oder 1b oder versagt die steuernde Spannungsquelle 4a bzw. 4b, entsteht eine Ungleichheit der Signale an den Normaleingängen 44a und 44b, was die Auswerte- und Steuerschaltung 43 veranlaßt, einen Fehler zu erkennen, der einen sofortigen Stopp der gesamten Anlage nach sich zieht.

Das Filter 11a hat gleichzeitig die Funktion, die bei mechanischen Schaltern unweigerlich auftretenden Störimpulse zu unterdrücken, die auftreten, wenn der Schalter 1a bzw. 1b geschlossen wird und dabei prellt. Die Folge hiervon ist, daß die beiden Filter 8a und 11a bzw. die entsprechenden Filter in dem Kanal 3 eine verhältnismäßig lange Einschwingzeit haben. Die Einschwingzeit liegt im Bereich um die 1 bis 5 ms, so daß wegen dieser langen Einschwingzeit entweder überhaupt keine oder nur sehr selten Funktionstests über diese Kette aus den Filtern 8a und 11a laufen kann, weil notwendigerweise während der Tests der Zustand der beiden Schalter la und 1b nicht abgefragt werden kann. Es ist deswegen ein spezieller Testmodus vorgesehen, bei dem die Auswerte- und Steuerschaltung, die an den Normaleingängen 44a und 44b ankommenden Signale während der Testphase ignoriert.

### Testphase

Wenn Türen oder vergleichbare Anlagenteile überwacht werden, ist es natürlich, daß die entsprechenden Schalter also die beiden Schalter 1a und 1b vergleichsweise nur extrem selten betätigt werden und lange Zeit ihren Schaltzustand nicht verändern. Fehler, die in den Zuleitungen 6a und 7a bzw. 6b und 7b auftreten, bleiben, wenn keine besonderen Vorkehrungen getroffen werden, entsprechend lange unentdeckt. Um vorzeitig Beschädigungen erkennen zu können, wird periodisch von der Auswerte- und Steuerschaltung 43 der Testmodus eingeschaltet. Im Testmodus veranlaßt die Auswerte- und Steuerschaltung 43 die Teststeuerschaltung 41, beispielsweise im Kanal 2 den Transistor 12a ab- und den Transistor 13a einzuschalten. Liegt kein Kurzschluß zwischen den Leitungen 6a und 7a einerseits und den Leitungen 6b und 7b andererseits vor, muß die Spannung an dem Stromausgang 5a, der nunmehr mit dem Widerstand des ohmschen Widerstand 18a geerdet ist, innerhalb einer festgelegten Zeit nach Null gehen. Entsprechend vergrößert sich der Spannungsabfall an der Eingangsseite des Optokopplers 51a, der diese Spannungsänderung über das Filter 47a in den Testeingang 45a weiterleitet.

Das Filter 47a ist lediglich dann notwendig, wenn mit größeren Hochfrequenzstörungen zu rechnen ist, die von dem Testeingang 45a ferngehalten werden sollen. Jedenfalls hat das Filter 47a eine wesentlich höhere Grenzfrequenz und schwingt deswegen um wenigstens den Faktor 10 schneller ein, als die Serienschaltung aus den Filtern 8a und 11a. Insbesondere braucht das Filter 47a nicht die eventuell lange andauernden Prellzeiten der mechanischen Schalter 1a und 1b zu berücksichtigen. Die Auswerteschaltung erhält deswegen an dem Testeingang 45a sehr schnell Kenntnis davon, ob entsprechend einer fehlerfreien elektrischen Verbindung die Spannung an dem Stromausgang 5a umgehend auf Null geht.

Liegt in Folge einer Quetschung des Kabels eine Querschlußverbindung, beispielsweise von der Leitung 6a zu der Leitung 6b vor, so wird über diesen Kurzschluß die Spannung des Stromausgangs 5b auf den Stromausgang 5a verschleppt, d.h. obwohl der Transistor 13a leitend ist, entsteht an dem Stromausgang 5a eine verhältnismäßig große Spannung, deren Vorhandensein innerhalb sehr kurzer Zeit über den Optokoppler 51a an den Testeingang 45a der Auswerte- und Steuerschaltung 43 gemeldet wird. Die Auswerte- und Steuerschaltung 43 kennt somit den Fehler und ist in der Anlage die nicht mehr ordnungsgemäß arbeitende Anlage in sinnvoller Weise stillzusetzen.

Nachdem dieser Testzyklus durchgelaufen ist, wird die Teststeuerschaltung 41 veranlaßt, dafür zu sorgen, daß der Transistor 12a wieder leitend geschaltet, nachdem der Transistor 13a gesperrt wurde. Für den Kanal 3 wird nun ebenfalls der Transistor 13b ein- und der Transistor 12b ausgeschaltet, um auch in dem Kanal 3 denselben Test ablaufen zu lassen. Gleichzeitig wird damit die Funktionsfähigkeit und Steuerbarkeit auch der anderen Spannungsquelle 4b überprüft und es können Kurzschlüsse mit Diodencharakteristik erkannt werden. Das wechselseitige Durchtesten jedes einzelnen Kanals ist insbesondere dann notwendig, wenn wenigstens noch ein dritter Kanal vorhanden ist, denn dann können Kurzschlüsse zwischen dem Kanal 2 und dem weiteren Kanal oder dem Kanal 3 und dem weiteren Kanal auftreten, die allein mit dem Testen des Kanals 2 nicht erfaßt werden können.

Der Testalgorithmus für n Kanäle sieht allgemein so aus, daß während der Testphase über die Teststeuerschaltung 41 alle n Spannungsquellen 4 zunächst abgeschaltet werden und dann der Reihe nach eine Spannungsquelle 4 nach der anderen jeweils einzeln, also in einem 1-aus-n Verfahren eingeschaltet werden. Im schadensfreien Zustand dürften dann an den anderen Stromausgängen 5 keine Spannungen auftreten.

Dieser Test kann wegen der extrem kurzen Einschwingzeit des Filters 47a sehr schnell durchlaufen werden. Bei diesem Test wird, weil die Leitung 6a und 7a quasi von der Rückseite her geprüft wird, die Filterschaltung 8a und 11a umgangen.

Ferner ist es mit der neuen Anordnung möglich, bei geöffneten Schaltern 1a und 1b auch Kurzschlüsse zwischen der Leitung 6a und der Schaltungsmasse 14a bzw. 6b und der Schaltungsmasse 14b zu erkennen. Wenn ein solcher Kurzschluß vorliegt, bricht die Spannung an dem Stromausgang 5a zusammen, obwohl die betreffende Spannungsquelle 4a in einen Zustand geschaltet ist, in der sie an sich Strom liefern würde. Den Spannungszustand an dem Stromausgang 5a übermittelt wiederum der Optokoppler 51a umgehend an den betreffenden Testeingang 45a, damit die Auswerte- und Steuerschaltung 43 die notwendigen Maßnahmen ergreifen kann.

Falls sich bei dem verwendeten Meldegerät nicht, wie gezeigt, um einfachen Schalter handelt, der auch reziprok den Strom leiten kann, besteht die Möglichkeit, zu dem Meldegerät eine entsprechend gepolte Diode parallel zuschalten, damit auch Schäden an der Leitung 7a vom Stromausgang 5a her erkannt werden können.

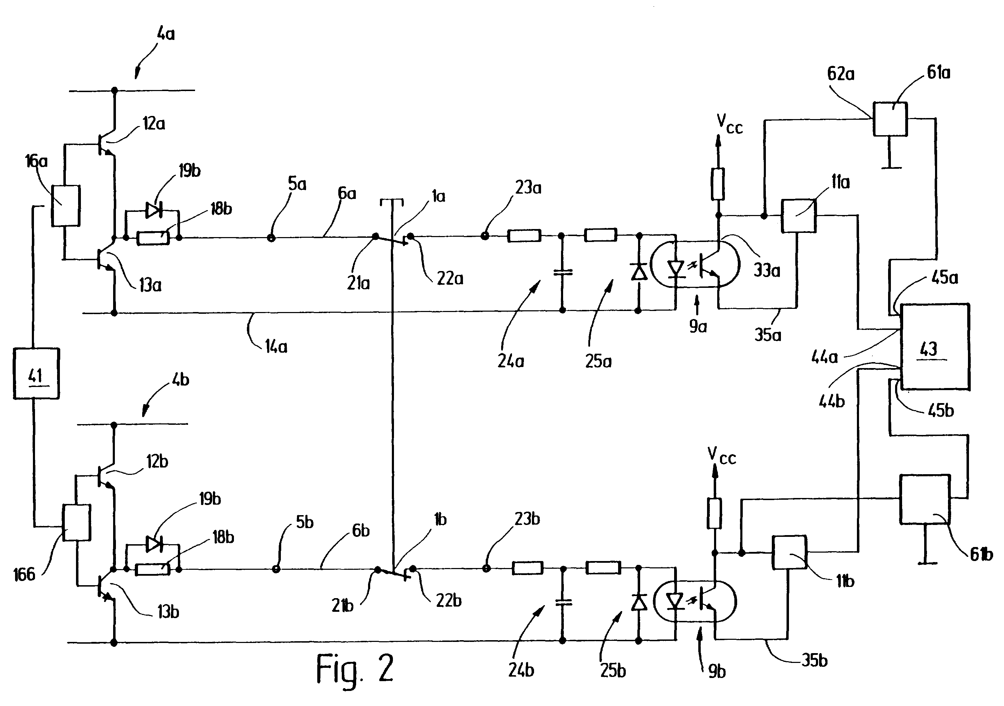

Fig. 2 zeigt eine alternative Ausführungsform, die sich ebenfalls zum schnellen Testen eignet und die sich von der Fig. 1 dadurch unterscheidet, daß anstelle der Optokoppler 51 Filter 61a und 61b verwendet werden, deren Eingang 62a unmittelbar an den Ausgang 33a des Optokopplers 9a angeschlossen ist. Ausgangsseitig liegt das Filter 16a an dem bereits erwähnten Testeingang 45a des Auswerte- und Steuerschaltung 43. Auf diese Weise kann die unter Umständen verhältnismäßig lange Einschwingzeit des Filters 11a umgangen werden. Ansonsten läuft der Test auf Querschlüsse zwischen den Leitungen 6a, 7a einerseits und den Leitungen 6b, 7b andererseits in der gleichen Weise ab, wie dies oben im Zusammenhang mit Fig. 1 erläutert ist. Der einzige Unterschied besteht darin, daß bei geöffneten Kontakten 1a und 1b kein Test möglich ist, weil kein Strom fließen kann.

Schließlich sei noch erwähnt, daß die Filter 11a, 47a und 61a naturgemäß auch in der mikroprozessorenbasierenden Auswerte- und Steuerschaltung 43 als softwaremäßige Filter realisiert werden können. Die Eingänge 44 und 45 entsprechen dann entsprechenden Weichen im Programm, jenachdem, ob die Filterfunktion mit einer großen oder einer kleinen Zeitkonstante erbracht werden soll.

Wesentlich ist in jedem Falle, daß zum Testen auf Schadensfreiheit mit anderen Filtern bzw. Filterkonstanten die Verbindung zwischen dem Stromausgang 5a und dem Eingang 23a überprüft wird, damit nur über eine sehr kurze Zeit die Überwachung durch die Meldegeräte 1a und 1b unterbrochen ist. Die Zeit muß so kurz sein, daß keine gefährlichen Anlagenzustände auftreten können.

Bei einer mehrkanaligen Überwachungseinrichtung zum Überwachen von Anlagenbetriebszuständen ist zum Testen auf Schadens freiheit der Zuleitungen zu den Meldegeräten an der Auswerte- und Überwachungsschaltung je Kanal ein weitere Testeingang vorgesehen. In der Zuleitung zu diesem Testeingang sind entweder keine Filter oder Filter mit kurzer Einschwingzeit vorgesehen. Dadurch wird erreicht, daß die Überprüfung nur sehr kurze zeit benötigt, damit nur über eine sehr kurze Zeit die Auswertung der Meldegeräte unterbrcchen ist. Die Zeit ist so kurz, daß keine gefährlichen Anlagenzustände auftreten können.

## Patentansprüche

1. Wenigsten zwei Kanäle (2,3) umfassende Überwachungseinrichtung zum Überwachen von Anlagenbetriebszuständen,
wobei jeder Kanal (2,3) aufweist:
eine Spannungsquelle (4) mit einem Stromausgang (5), der von den Stromausgängen (5) der Spannungsquellen (4) der anderen Kanäle (2,3) rückwirkungsfrei entkoppelt ist,
ein Meldegerät (1), das einen Stromversorgungseingang (21), an den der Stromausgang (5) der zugehörigen Spannungsquelle (4) über eine erste Leitung (6) angeschlossen ist, sowie einen Signalausgang (22) aufweist, und
Mittel (12,13,16) zum Verändern der in die erste Leitung (6) eingespeisten Spannung,
mit einer allen Kanälen (2,3) gemeinsamen Teststeuerschaltung (41), die Steuerausgänge (42) entsprechend der Anzahl der Kanäle (2,3) aufweist, die mit den Mitteln (12,13,16) zum Verändern der Spannungen verbunden sind und die die Mittel (12,13,16) derart steuert, daß
(a) während kein Testzyklus läuft, alle Meldegeräte (1) mit Spannung versorgt werden, oder entweder
(b) während eines Testzyklus lediglich eines der Meldegeräte (1) mit Spannung versorgt wird, während die übrigen Meldegeräte (1) ohne Spannung sind, wobei nacheinander jedes Meldegerät (1) während jedes Testzyklus einmal zeitweilig mit Spannung versorgt wird, oder
(c) während eines Testzyklus lediglich eines der Meldegeräte (1) nicht mit Spannung versorgt wird, während die übrigen Meldegeräte (1) mit Spannung versorgt sind, wobei nacheinander jedes Meldegerät (1) während jedes Testzyklus einmal zeitweise keine Spannung erhält, oder
(d) während eines Testzyklus die Zyklen (b) und (c) nacheinander oder verschachtelt durchlaufen werden, und
mit einer allen Kanälen (2,3) gemeinsamen Auswerte- und Steuerschaltung, die je Meldegerät (1) wenigstens einen Testeingang (45) aufweist, in den ein Signal eingespeist wird, das von dem Spannungssignal abgeleitet ist, das an dem Stromversorgungseingang (5) des betreffenden Meldegeräts (1) anliegt.

2. Überwachungseinrichtung nach Anspruch 1, dadurch gekennzeichnet, daß die Testeingänge (45) der Auswerte- und Steuerschaltung (43) an den Stromausgang (5) der jeweiligen Spannungsquelle (4) angeschlossen sind.

3. Überwachungseinrichtung nach Anspruch 1, dadurch gekennzeichnet, daß die Testeingänge (45) der Auswerte- und Steuerschaltung (43) an Enden von zweiten Leitungen (7) angeschlossen sind, die die Meldegeräte (1) mit Normaleingängen (44) der Auswerte- und Steuerschaltung (43) verbinden.

4. Überwachungseinrichtung nach Anspruch 1, dadurch gekennzeichnet, daß die Mittel (12,13,16) zum Verändern der Spannung derart gestaltet sind, daß sie in einem ihrer Betriebszustände die Spannung der Spannungsquelle (4) im wesentlichen unverändert an das jeweilige Meldegerät (1) weiterleiten.

5. Überwachungseinrichtung nach Anspruch 1, dadurch gekennzeichnet, daß die Mittel (12,13,16) zum Verändern der Spannung derart gestaltet sind, daß sie in einem ihrer Betriebszustände den Stromversorgungseingang (21) des jeweiligen Meldegeräts (1) mit einem definierten Widerstand belasten.

6. Überwachungseinrichtung nach Anspruch 1, dadurch gekennzeichnet, daß die wenigstens zwei Spannnungsquellen (4a,4b) an eine gemeinsame Stromversorgung (15) angeschlossen sind.

7. Überwachungseinrichtung nach Anspruch 1, dadurch gekennzeichnet, daß die Mittel (12,13,16) zum Verändern der Spannung einen von der Stromflußrichtung abhängigen Innenwiderstand aufweisen.

8. Überwachungseinrichtung nach Anspruch 1, dadurch gekennzeichnet, daß die Spannungsquelle (4) oder die Mittel (12,13,16) zum Verändern der Spannung einen definierten Innenwiderstand aufweist bzw. aufweisen, der wenigstens um den Faktor 1,5 größer ist als der Widerstand gemessen zwischen dem Stromversorgungseingang (21) und dem Signalausgang (22) zuzüglich dem Widerstand von Verbindungsleitungen (6,7) zum Anschluß des Meldegeräts (1).

9. Überwachungseinrichtung nach Anspruch 1, dadurch gekennzeichnet, daß die Mittel (12,13,16) zum Verändern der Spannung die jeweiligen Spannungsquelle (4) bilden.

10. Überwachungseinrichtung nach Anspruch 1, dadurch gekennzeichnet, daß die Mittel (12,13,16) zum Verändern der Spannung im Gegentakt geschaltete elektronische Schalter (12,13) aufweisen, von denen der eine (12) mit einer Versorgungsspannung (15) und der andere (13) mit einer Schaltungsmasse (14) verbunden ist.

11. Überwachungseinrichtung nach Anspruch 1, dadurch gekennzeichnet, daß den Eingängen (44,45) der Auswerte- und Steuerschaltung (43) Optokoppler (9,51) vorgeschaltet sind.

12. Überwachungseinrichtung nach Anspruch 1, dadurch gekennzeichnet, daß die Auswerte- und Steuerschaltung (43) zum Auswerten der Meldegeräte (1) im Normalbetrieb Normaleingänge (44) aufweist, und daß den Normaleingängen (44) der Auswerte- und Steuerschaltung (43) Amplituden- und/-oder Frequenzfilter (8,11) vorgeschaltet sind.

13. Überwachungseinrichtung nach Anspruch 12, dadurch gekennzeichnet, daß die Meldegeräte (1) über zweite Leitungen (7) an die Normaleingänge (44) der Auswerte- und Steuerschaltung (43) angeschlossen sind.

14. Überwachungsschaltung nach Anspruch 1, dadurch gekennzeichnet, daß den Testeingängen (45) der Auswerte- und Steuerschaltung (43) Filter (47,61) vorgeschaltet sind.

15. Überwachungseinrichtung nach den Ansprüchen 12 und 14, dadurch gekennzeichnet, daß die Einschwingzeit der den Testeingängen (45) vorgeschalteten Filter (47,51) kürzer ist als die Einschwingzeit der den Normaleingängen vorgeschalteten Filter (8,11).

16. Überwachungseinrichtung nach einem der Ansprüche 12 bis 15, dadurch gekennzeichnet, daß zumindest einige der Filter (11,47,61) softwaremäßig realisiert sind.

17. Überwachungseinrichtung nach Anspruch 1, dadurch gekennzeichnet, daß das Meldegerät (1) in Rückwärtsrichtung von dem Signalausgang (22) zu dem Stromversorgungseingang (21) stromübertragend ist.

18. Verfahren zum Überprüfen einer wenigstens zweikanaligen Überwachungseinrichtung, die je Kanal (2,3) ein Meldegerät (1) mit einem Stromversorgungseingang (21) und einem Signalausgang (22) sowie ein Spannungsquelle (4) enthält, die von den Spannungsquellen (4) der übrigen Kanäle rückwirkungsfrei entkoppelt ist, bei dem
(a) während kein Testzyklus läuft, alle Meldegeräte (1) mit Spannung versorgt werden, oder entweder
(b) während eines Testzyklus lediglich eines der Meldegeräte (1) mit Spannung versorgt wird, während die übrigen Meldegeräte (1) ohne Spannung sind, wobei nacheinander jedes Meldegerät (1) während jedes Testzyklus einmal mit Spannung versorgt wird, oder
(c) während eines Testzyklus lediglich eines der Meldegeräte (1) nicht mit Spannung versorgt wird, während die übrigen Meldegeräte (1) mit Spannung versorgt werden, wobei nacheinander jedes Meldegerät (1) während jedes Testzyklus einmal keine Spannung erhält, oder
(d) während eines Testzyklus die Zyklen (b) und (c) nacheinander oder verschachtelt durchlaufen werden.

19. Verfahren nach Anspruch 18, dadurch gekennzeichnet, daß die Spannung an dem Stromversorgungseingang (21) desjenigen Meldegeräts (1) überprüft wird, bei dem während des Testzyklus die Versorgungsspannung in einen anderen Zustand geschaltet ist als dem normalen Betriebszustand entspricht.

20. Verfahren nach Anspruch 18, dadurch gekennzeichnet, daß die Spannung an dem Stromversorgungseingang (21) desjenigen Meldegeräts (1) überprüft wird, bei dem während des Testzyklus die Versorgungsspannung in den Zustand geschaltet ist, der dem normalen Betriebszustand entspricht.

## Claims

1. Monitoring arrangement comprising at least two channels (2, 3) for monitoring operating states in systems,
whereby each channel (2, 3) has:
a voltage source (4) with a power output (5), which is decoupled from the power outputs (5) of the voltages sources (4) of the other channels (2, 3) in a manner free from feedback,
an indicator device (1), which has a power supply input (21), to which the power output (5) of the associated voltage source (4) is connected via a first line (6), as well as a signal output (22), and
means (12, 13, 16) for changing the voltage fed into the first line (6),
with a test control circuit (41), which is common to all channels (2, 3) and has control outputs (42) corresponding to the number of channels (2, 3), and which is connected to the means (12, 13, 16) for changing the voltages and controls the means (12, 13, 16) in such a manner that
(a) when no test cycle is running all the indicator devices (1) are supplied with voltage, or either
(b) during a test cycle only one of the indicator devices (1) is supplied with voltage, while the other indicator devices (1) are without voltage, whereby each indicator device (1) in succession is temporarily supplied once with voltage during each test cycle, or
(c) during a test cycle only one of the indicator devices (1) is not supplied with voltage, whereas the other indicator devices (1) are supplied with voltage, whereby each indicator device (1) in succession temporarily does not receive any voltage once during each test cycle, or
(d) during a test cycle the cycles (b) and (c) are executed in succession or interleaved, and
with an evaluation and control circuit common to all channels (2, 3), which has at least one test input (45) for each indicator device (1), into which test input a signal derived from the voltage signal is fed, said voltage signal being present at the power supply input (5) of the respective indicator device (1).

2. Monitoring arrangement according to Claim 1, characterised in that the test inputs (45) of the evaluation and control circuit (43) are connected to the power output (5) of the respective voltage source (4).

3. Monitoring arrangement according to Claim 1, characterised in that the test inputs (45) of the evaluation and control circuit (43) are connected to ends of second lines (7), which connect the indicator devices (1) to normal inputs (44) of the evaluation and control circuit (43).

4. Monitoring arrangement according to Claim 1, characterised in that the means (12, 13, 16) for changing the voltage are structured in such a way that in one of their operating states they pass the voltage of the voltage source (4) substantially unchanged to the respective indicator device (1).

5. Monitoring arrangement according to Claim 1, characterised in that the means (12, 13, 16) for changing the voltage are structured in such a way that in one of their operating states they subject the power supply input (21) of the respective indicator device (1) to a defined resistance.

6. Monitoring arrangement according to Claim 1, characterised in that the at least two voltage sources (4a, 4b) are connected to a common power supply (15).

7. Monitoring arrangement according to Claim 1, characterised in that the means (12, 13, 16) for changing the voltage have an internal resistance dependent on the direction of current flow.

8. Monitoring arrangement according to Claim 1, characterised in that the voltage source (4) or the means (12, 13, 16) for changing the voltage has or have a defined internal resistance, which is at least 1.5-times higher than the resistance measured between the power supply input (21) and the signal output (22) plus the resistance of connection lines (6, 7) for connection of the indicator device (1).

9. Monitoring arrangement according to Claim 1, characterised in that the means (12, 13, 16) for changing the voltage form the respective voltage source (4).

10. Monitoring arrangement according to Claim 1, characterised in that the means (12, 13, 16) for changing the voltage have push-pull connected electronic switches (12, 13), of which one (12) is connected to a supply voltage (15) and the other (13) is connected to a circuit earth (14).

11. Monitoring arrangement according to Claim 1, characterised in that optical couplers (9, 51) are connected upline of the inputs (44, 45) of the evaluation and control circuit (43).

12. Monitoring arrangement according to Claim 1, characterised in that the evaluation and control circuit (43) has normal inputs (44) for evaluating the indicator devices (1) in normal operation, and that amplitude and/or frequency filters (8, 11) are connected upline of the normal inputs (44) of the evaluation and control circuit (43).

13. Monitoring arrangement according to Claim 12, characterised in that the indicator devices (1) are connected to the normal inputs (44) of the evaluation and control circuit (43) via second lines (7).

14. Monitoring arrangement according to Claim 1, characterised in that filters (47, 61) are connected upline of the test inputs (45) of the evaluation and control circuit (43).

15. Monitoring arrangement according to Claims 12 and 14, characterised in that the build-up time of the filters (47, 61) connected upline of the test inputs (45) is shorter than the build-up time of the filters (8, 11) connected upline of the normal inputs.

16. Monitoring arrangement according to one of Claims 12 to 15, characterised in that at least some of the filters (11, 47, 61) are formed by means of software.

17. Monitoring arrangement according to Claim 1, characterised in that the indicator device (1) transmits power in reverse direction from the signal output (22) to the power supply input (21).

18. Method for checking an at least dual-channel monitoring system containing for each channel (2, 3) an indicator device (1) with a power supply input (21) and a signal output (22) as well as a voltage source (4), which is decoupled from the voltage sources (4) of the other channels in a manner free from feedback, in which
(a) when no test cycle is running all the indicator devices (1) are supplied with voltage, or either
(b) during a test cycle only one of the indicator devices (1) is supplied with voltage, while the other indicator devices (1) are without voltage, whereby each indicator device (1) in succession is temporarily supplied once with voltage during each test cycle, or
(c) during a test cycle only one of the indicator devices (1) is not supplied with voltage, whereas the other indicator devices (1) are supplied with voltage, whereby each indicator device (1) in succession temporarily does not receive any voltage once during each test cycle, or
(d) during a test cycle the cycles (b) and (c) are executed in succession or interleaved.

19. Method according to Claim 18, characterised in that the voltage is checked at the power supply input (21) of the indicator device (1) in which during the test cycle the supply voltage is switched to a different state to that corresponding to the normal operating state.

20. Method according to Claim 18, characterised in that the voltage is checked at the power supply input (21) of the indicator device (1) in which during the test cycle the supply voltage is switched to the state corresponding to the normal operating state.

## Revendications

1. Dispositif de surveillance pour la surveillance d'états de fonctionnement d'installations comportant au moins deux canaux (2, 3),
chaque canal (2, 3) comprenant:
une source de tension (4) avec une sortie de courant (5) qui est découplée sans rétroaction des sources de tension (4) des autres canaux,
un appareil détecteur (1) avec une entrée d'alimentation en courant (21), à laquelle la sortie de courant (5) de la source de tension (4) concernée est connectée par l'intermédiaire d'une première ligne (6) ainsi qu'avec une sortie de signal (22) et,
des moyens (12, 13, 16) pour faire varier la tension envoyée dans la première ligne (6),
avec un circuit de commande de test (41) commun à tous les canaux (2, 3), qui présente des sorties de commande (42) en nombre égal au nombre de canaux (2, 3), sont reliés aux moyens (12, 13, 16) pour faire varier les tensions et commandent lesdits moyens (12, 13, 16) de telle sorte que
a) pendant qu'aucun cycle de test n'est en cours, tous les appareils détecteurs (1) sont alimentés en tension ou bien
b) pendant un cycle de test, seulement l'un des appareils détecteurs (1) est alimenté en tension tandis que les autres appareils détecteurs (1) ne reçoivent pas de tension, chacun des appareils détecteurs (1) étant alimenté en tension temporairement une fois pendant chaque cycle de test, ou bien
c) pendant un cycle de test seul l'un des appareils détecteurs (1) n'est pas alimenté en tension tandis que les autres appareils détecteurs (1) sont alimentés en tension, chacun des appareils détecteurs (1) ne recevant pas de tension temporairement une fois pendant chaque cycle de test, ou bien
d) pendant un cycle de test, les cycles b) et c) sont déroulés successivement ou en alternance,
avec un circuit de traitement et de commande commun à tous les canaux (2, 3) qui comporte au moins une entrée de test (45) par appareil détecteur à laquelle est envoyé un signal qui est dérivé du signal de tension appliqué à l'entrée d'alimentation en courant (5) de l'appareil détecteur concerné (1).

2. Dispositif de surveillance selon la revendication 1, caractérisé par le fait que les entrées de test (45) du circuit de test et de commande (43) sont connectées à la sortie de courant (5) de la source de tension (4) concernée.

3. Dispositif de surveillance selon la revendication 1, caractérisé par le fait que les entrées de test (45) du circuit de test et de commande (43) sont connectées aux extrémités de deuxièmes lignes (7) qui relient les appareils détecteurs (1) à des entrées normales (44) du circuit de test et de commande(43).

4. Dispositif de surveillance selon la revendication 1, caractérisé par le fait que les moyens (12, 13, 16) pour faire varier la tension sont agencés de telle sorte que dans un de leurs états de fonctionnement, ils transmettent la tension de la source de tension (4) essentiellement non modifiée à l'appareil détecteur (1) concerné.

5. Dispositif de surveillance selon la revendication 1, caractérisé par le fait que les moyens (12, 13, 16) pour faire varier la tension sont agencés de telle sorte que dans un de leurs états de fonctionnement, ils chargent avec une résistance déterminée l'entrée d'alimentation en courant (21) de l'appareil détecteur (1) concerné.

6. Dispositif de surveillance selon la revendication 1, caractérisé par le fait que les sources de tension (4a, 4b), au nombre d'au moins deux, sont connectées à une alimentation en courant (15) commune.

7. Dispositif de surveillance selon la revendication 1, caractérisé par le fait que les moyens (12, 13, 16) pour faire varier la tension présentent une résistance interne qui dépend du sens de passage du courant.

8. Dispositif de surveillance selon la revendication 1, caractérisé par le fait que la source de tension (4) ou les moyens (12, 13, 16) pour faire varier la tension présente ou présentent une résistance interne définie qui est supérieure d'au moins un facteur 1,5 à la résistance mesurée entre l'entrée d'alimentation en courant (21) et la sortie de signal (22) plus la résistance de lignes de connexion (6, 7) pour la connexion de l'appareil détecteur (1) concerné.

9. Dispositif de surveillance selon la revendication 1, caractérisé par le fait que les moyens (12, 13, 16) pour faire varier la tension constituent la source de tension (4) concernée.

10. Dispositif de surveillance selon la revendication 1, caractérisé par le fait que les moyens (12, 13, 16) pour faire varier la tension comportent des commutateurs électroniques (12, 13) branchés en opposition, parmi lesquels l'un (12) est connecté à une tension d'alimentation (15) et l'autre est connecté à une masse de circuit (14)

11. Dispositif de surveillance selon la revendication 1, caractérisé par le fait qu'un coupleur optique (9, 51) est placé avant les entrées (44, 45) du circuit de traitement et de commande (43).

12. Dispositif de surveillance selon la revendication 1, caractérisé par le fait que le circuit de traitement et de commande (43) présente des entrées normales (44) pour le traitement des données des appareils détecteurs (1) en fonctionnement normal et par le fait que des filtres d'amplitude et/ou filtres de fréquence (8, 11) sont placés en amont des entrées normales (44) du circuit de traitement et de commande (43).

13. Dispositif de surveillance selon la revendication 12, caractérisé par le fait que les appareils détecteurs (1) sont connectés par des deuxième lignes (7) aux entrées normales (44) du circuit de traitement et de commande (43).

14. Dispositif de surveillance selon la revendication 1, caractérisé par le fait que des filtres (47, 61) sont placés en amont des entrées de test (45) du circuit de traitement et de commande(43).

15. Dispositif de surveillance selon les revendications 12 et 14, caractérisé par le fait que le temps de réponse des filtres placés avant les entrées de test (45) est plus court que le temps de réponse des filtres placés avant les entrées normales (8, 11).

16. Dispositif de surveillance selon une des revendications 12 à 15, caractérisé par le fait que quelques uns des filtres (11,47,61) au moins sont réalisés par logiciel.

17. Dispositif de surveillance selon la revendication 1, caractérisé par le fait que l'appareil détecteur (1)est passant dans la direction de retour de la sortie de signal (22) vers l'entrée d'alimentation en courant (21).

18. Procédé pour le contrôle d'un dispositif de surveillance à au moins deux canaux, qui comprend pour chaque canal (2, 3) un appareil détecteur (1) avec une entrée d'alimentation en courant (21) et une sortie de signal (22) ainsi qu'une source de tension (4) qui est découplée sans rétroaction des sources de tension (4) des autres canaux, selon lequel
a) pendant qu'aucun cycle de test n'est en cours, tous les appareils détecteurs (1) sont alimentés en tension ou bien
b) pendant un cycle de test, seulement l'un des appareils détecteurs (1) est alimenté en tension tandis que les autres appareils détecteurs (1) ne reçoivent pas de tension, chacun des appareils détecteurs (1) étant alimenté en tension une fois pendant chaque cycle de test, ou bien
c) pendant un cycle de test seul un des appareils détecteurs (1) n'est pas alimenté en tension tandis que les autres appareils détecteurs (1) sont alimentés en tension, chacun des appareils détecteurs (1) ne recevant pas de tension une fois pendant chaque cycle de test, ou bien
d) pendant un cycle de test les cycles b) et c) sont déroulés successivement ou en alternance.

19. Procédé selon la revendication 18, caractérisé par le fait que l'on contrôle la tension à l'entrée d'alimentation en courant (21) de l'appareil détecteur (1) pour lequel, pendant le cycle de test, la tension d'alimentation est commutée dans un état autre que l'état de fonctionnement normal.

20. Procédé selon la revendication 18, caractérisé par le fait que l'on contrôle la tension à l'entrée d'alimentation en courant (21) de l'appareil détecteur (1) pour lequel, pendant le cycle de test, la tension d'alimentation est commutée dans un état qui correspond à l'état de fonctionnement normal.
